# EUROPEAN PATENT SPECIFICATION

(11) **EP 3 915 743 B1**
(45) Date of publication and mention of the grant of the patent: **29.03.2023**
(21) Application number: 21175812.3
(22) Date of filing: 25.05.2021
(51) Int. Cl.: B27M 1/08, B23Q 1/00, B23Q 1/03, B23Q 3/08

(54) **MACHINE FOR PROCESSING COMPONENTS OF WOOD OR THE LIKE**
MASCHINE ZUR VERARBEITUNG VON KOMPONENTEN AUS HOLZ ODER DERGLEICHEN
MACHINE POUR COMPOSANTS DE TRAITEMENT DE BOIS OU ANALOGUE

(30) Priority: 25.05.2020 IT 202000002827 U
(43) Date of publication of application: 01.12.2021
(73) Proprietor: BIESSE S.p.A., 61122 Pesaro (IT)
(72) Inventor: TORRACA, Roberto, 61122 Pesaro (PU) (IT)
(74) Representative: Manconi, Stefano

(56) References cited:
- EP-A1- 0 507 033
- EP-A1- 3 403 795
- EP-A2- 1 075 903
- DE-A1- 4 101 904
- DE-A1-102008 016 159

## Description

### TECHNICAL FIELD

The present innovation relates to a machine for processing components of wood or the like, according to the preamble of claim 1. Such a machine is known from the document DE 10 2008 016159 A1.

The present innovation is particularly advantageous when applied to the processing of wooden panels, which the discussion below will make explicit reference to without detracting from its general application.

### BACKGROUND ART

In the wood panel processing industry, it is known to manufacture a machine of the type comprising an elongated base provided with two longitudinal, guiding, side members parallel to a substantially horizontal first direction; a plurality of cross members mounted between the longitudinal, guiding side members parallel to a substantially horizontal second direction transverse to the first direction; and at least one support block mounted on each cross member to hold at least one panel.

The machine is also equipped with an overhead crane, which is movable along the base in the first direction, extends above the base in the second direction, and supports, normally, an operating head for machining the panels by chip removal.

Each support block is positioned on the relative cross member according to the dimensions of the panels to be machined, and is limited by a substantially flat top face that can be connected to a pneumatic suction device by means of a valve device operated by said panels.

The top faces of the support blocks are coplanar with each other and together define a substantially horizontal support plane capable of supporting at least one panel to be machined.

The known support blocks of the aforementioned type have certain drawbacks mainly arising from the fact that the relatively small distance between said support plane and the cross members prevents the machining of the side faces of the panels by means of further operating units, for example edgebanding units and/or drilling units, which would interfere with said cross members.

The technical drawback described above has been resolved by the use of support blocks each comprising a respective bottom slide, slidingly coupled to the relative cross member and a respective top support plate slidingly coupled to the bottom slide to move perpendicularly to the support plane between a raised and a lowered position.

The support plate is connected to the aforesaid pneumatic suction device by means of a pneumatic circuit comprising at least one telescopic feed line interposed between the bottom slide and the support plate and defined by at least two tubes slidingly coupled to each other.

The known machines for processing components of wood of the type described above have certain drawbacks primarily arising from the fact that the support blocks are relatively complex and expensive due to the presence of the telescopic feed lines, involve lubrication of the telescopic feed lines, and require relatively frequent maintenance.

### DISCLOSURE OF INVENTION

The object of the present innovation is to provide a machine for processing components of wood or the like which resolves the drawbacks described above and is simple and economical to make.

According to the present innovation, a machine for processing components of wood or the like is provided as claimed in the appended claims.

### BRIEF DESCRIPTION OF THE DRAWINGS

The present innovation will now be described with reference to the appended drawings, which illustrate a nonlimiting embodiment, wherein:
Figure 1 is a schematic perspective view, with parts removed for clarity, of a preferred embodiment of the machine of the present innovation;
Figure 2 is an enlarged schematic perspective view, with parts removed for clarity, of a detail of the machine in Figure 1; and
Figures 3 and 4 are two schematic perspective views, with parts removed for clarity, of a detail in Figure 2, shown in two different operating positions.

### BEST MODE FOR CARRYING OUT THE INVENTION

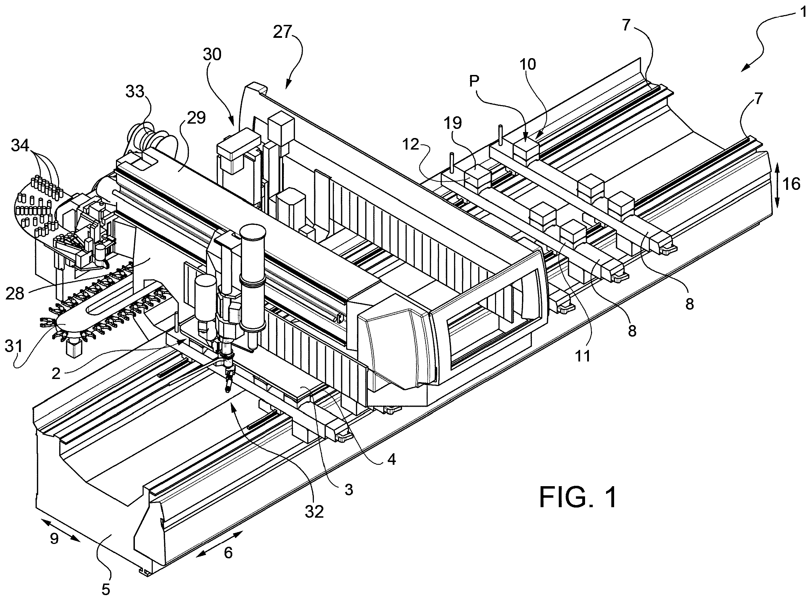

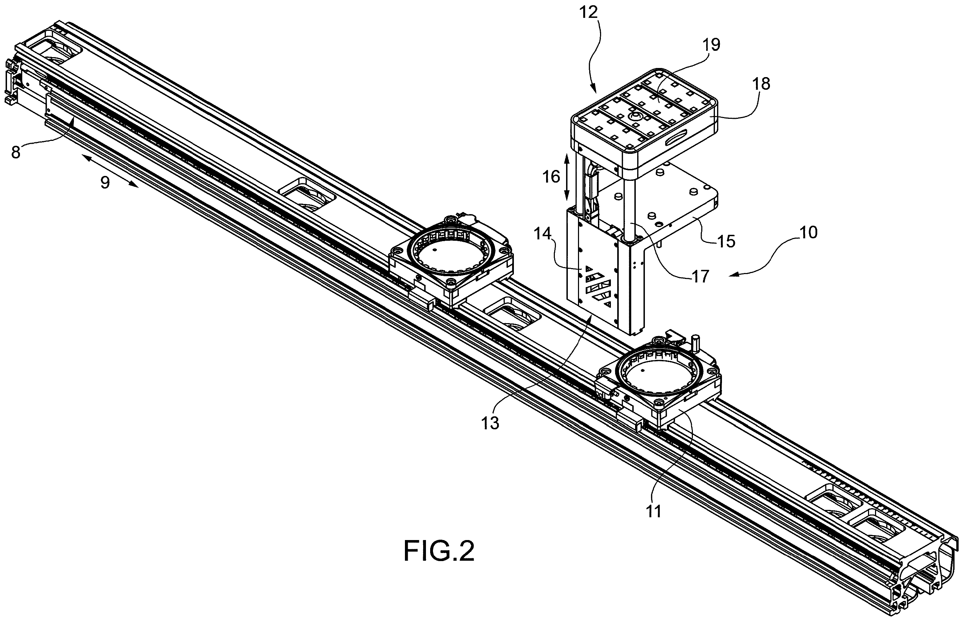

With reference to Figures 1 and 2, reference numeral 1 globally indicates a machine for processing components of wood or the like defined, in the present case, by substantially flat panels 2, each of which is limited by two main faces 3 parallel to each other and by an outer lateral contour 4 substantially perpendicular to the faces 3.

The machine 1 comprises an elongated base 5, which extends in a horizontal direction 6, is substantially U-shaped, and has two longitudinal, guiding, side members 7 parallel to the direction 6.

The base 5 supports a plurality of cross members 8, which will hereinafter be referred to as "worktables", extend between the side members 7 in a horizontal direction 9 transverse to the direction 6, and are slidingly coupled to the side members 7 to be moved, either manually or by respective known actuator devices (not illustrated), along the side members 7 in the direction 6.

The worktables 8 support a plurality of support blocks 10, the arrangement of which on the respective worktables 8 depends substantially on the size of the panels 2 to be machined and the machining to be performed on the panels 2.

According to the illustrations in Figures 2, 3, and 4, each block 10 comprises a bottom slide 11 movable along the relative worktable 8 in the direction 9, and an interchangeable support unit 12 detachably mounted on the slide 11.

The unit 12 has a bottom coupling plate 13, which has an L-shape, is locked to the slide 11, and comprises a substantially vertical portion 14 perpendicular to the direction 6 and a substantially horizontal portion 15 perpendicular to a vertical direction 16 orthogonal to the directions 6 and 9.

The portion 14 houses within it two actuator cylinders (not shown) parallel to each other, which extend in the direction 16, and have respective exit rods 17 projecting outside the plate 13 in the direction 16.

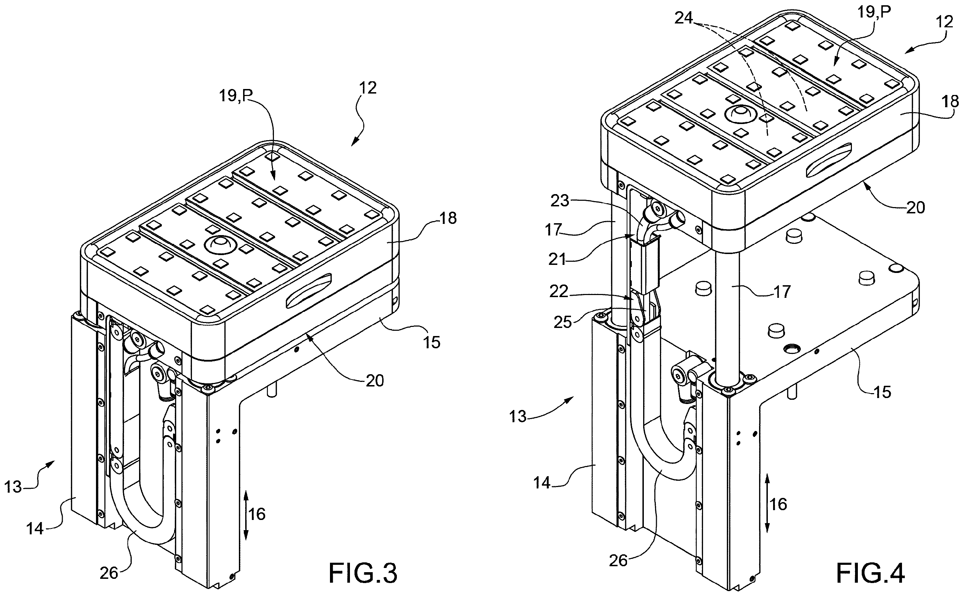

The unit 12 further comprises a top support plate 18, which is attached to the free ends of the rods 17, and is moved by the two actuator cylinders (not shown) between a lowered position (Figure 3), in which the plate 18 is arranged in contact with the plate 13, and a raised position (Figure 4), in which the plate 18 is arranged at a given distance from the plate 13.

The plate 18 is limited above and below, respectively, by two flat faces 19, 20 substantially orthogonal to the direction 16, of which:
the face 19 is connected to a pneumatic suction device (not shown) via a first pneumatic circuit 21 and defines, together with the faces 19 of the plates 18 of the other blocks 10, a support plane P for the panels 2; and
the face 20 is connected to a compressed air pneumatic device (not shown) by a second pneumatic circuit 22.

The circuit 21 comprises a first section (not shown) made through the slide 11 and the plate 13, a second section (not illustrated) made through the plate 18 and connected with the external environment at the top face 19, and a third section defined by a flexible feed line 23 coupled to the plate 13 and the plate 18 to connect the first section and the second section together.

The circuit 22 includes a first section (not illustrated) made through the slide 11 and the plate 13 and connected with the aforementioned actuator cylinders (not illustrated), a second section (not illustrated) made through the plate 18 and connected with the external environment through a plurality of feed holes 24 made on the bottom face 20, and a third section defined by a flexible feed line 25 engaged with the plate 13 and the plate 18 to connect the first section and the second section to each other.

The lines 23 and 25 are housed inside a cable-holder chain 26, which has a first free end attached to the plate 13 and a second free end attached to the plate 18, and is configured to guide said lines 23 and 25 during movements of the plate 18 between its raised position and its lowered position.

The base 5 further supports an overhead crane 27 comprising a vertical upright 28, which is coupled in a known manner to the base 5 in order to perform, along said base 5 and under the thrust of a known actuator device (not illustrated) rectilinear displacements in the direction 6, and bears a horizontal cross member 29 connected at one of its free ends and extending above the base 5 in the direction 9.

The overhead crane 27 supports a known type of operating head 30 suitable for performing chip removal machining of the panels 2.

The head 30 is coupled in a known manner to the cross member 29 to perform, with respect to the cross member 29, rectilinear displacements in the directions 9 and 16, and is associated with a tool-holder magazine 31 mounted through the upright 28.

The overhead crane 27 supports, moreover, an edgebanding unit 32 suitable for edgebanding the lateral contour 4 of the panels 2 with a finishing edge (not illustrated), which is taken from a magazine 33 mounted on the upright 28, and is fed to the group 32 by means of a plurality of unwinder rollers 34.

The displacement of the plates 18 between the relative lowered positions and the relative raised positions allows the operating head 30 and the edgebanding unit 32 to correctly perform the machining of both the faces 3 and the contour 4.

The lines 23 and 25 and the cable-holder chain 26 provide a relatively simple, inexpensive, and reliable connection of the face 19 to the circuit 21 and the face 20 to the circuit 22.

Of course, according to a variant not shown, the unit 12 is eliminated and replaced with a top support plate coupled directly to the slide 11 for moving between the lowered position and the raised position.

## Claims

1. - A machine for processing components (2) of wood or the like, the machine comprising at least two longitudinal, guiding, side members (7); at least two cross members (8) arranged on the side members (7) and positionable along the side members (7); at least one support block (10) mounted on each cross member (8) for holding at least one component (2), each support block (10) comprising a bottom slide (11, 13) slidingly coupled to the corresponding cross member (8) and a top plate (18), which is limited by a flat top face (19) defining a support plane (P) for at least one component (2), and is mounted on the bottom slide (11, 13) to move between a lowered position and a raised position; a first pneumatic circuit (21) for connecting the top face (19) to a pneumatic suction device, the first pneumatic circuit (21) comprising a first section made through the bottom slide (11, 13), a second section made through the top plate (18) and connected with the top face (19), and a third section for connecting said first and second sections to each other; and at least one operating head (30) for machining the components (2); and being **characterized in that** the third section of the first pneumatic circuit (21) comprises a flexible first feed line (23), which is coupled to the bottom slide (11, 13) and to the top plate (18), and is housed inside a cable-holder chain (26) designed to guide the first feed line (23) during the displacements of the top plate (18) between said lowered and raised positions.

2. - The machine according to claim 1, wherein the top plate (18) is limited by a bottom face (20) provided with a plurality of feed holes (24); a second pneumatic circuit (22) connecting the feed holes (24) with a pneumatic compressed air device.

3. - The machine according to claim 2, wherein the second pneumatic circuit (22) comprises a first section made through the bottom slide (11, 13), a second section made through the top plate (18) and connected with the feed holes (24), and a third section for connecting said first and second sections to each other.

4. - The machine according to claim 3, wherein the third section of the second pneumatic circuit (22) comprises a flexible second feed line (25), which is engaged with the bottom slide (11, 13) and the top plate (18), and is housed inside the cable-holder chain (26) to be guided during movements of the top plate (18) between said lowered and raised positions.

5. - The machine according to claim 3 or 4, wherein each support block (10) further comprises at least one actuator cylinder (17) for moving the top plate (18) between said lowered and raised positions, the first section of the second pneumatic circuit (22) being connected to the actuator cylinder (17).

6. - The machine according to any of the preceding claims, wherein the top plate (18) defines part of an interchangeable support unit (12) detachably mounted on the bottom slide (11).

7. - The machine according to claim 6, wherein the support unit (12) further comprises a bottom plate (13) detachably mounted on the bottom slide (11); the top plate (18) being slidingly coupled to said bottom plate (13).

8. - The machine according to any of the preceding claims and further comprising a portal (27), which extends above the cross members (8) transversely to the side members (7), and supports the operating head (30).

9. - The machine according to claim 8 and further comprising an edgebanding unit (32) mounted on the portal (27) .

10. - The machine according to claim 8 or 9 and further comprising a base (5) provided with side members (7); the portal (27) being movable along the base (5) transversely to the cross members (8).

## Patentansprüche

1. Maschine zur Verarbeitung von Komponenten (2) aus Holz oder dergleichen, umfassend wenigstens zwei längsverlaufende, führende, Seitenträger (7); wenigstens zwei auf den Seitenträgern (7) angeordnete und entlang der Seitenträger (7) positionierbarer Querträger (8); wenigstens ein auf jedem Querträger (8) befestigter Stützblock (10) zum Halten zumindest einer Komponente (2), jeder Stützblock (10) umfassend einen Bodenschlitten (11, 13), gleitend an den jeweiligen Querträger (8) gekoppelt, und eine Deckplatte (18), welche durch eine ebene, eine Stützebene (P) für zumindest eine Komponente (2) definierende Deckseite (19) begrenzt ist, und am Bodenschlitten (11, 13) befestigt ist, um sich zwischen einer abgesenkten und einer angehobenen Stellung zu bewegen; ein erster pneumatischer Kreislauf (21) zum Verbinden der Deckseite (19) mit einer pneumatischen Saugeinrichtung, der erste pneumatische Kreislauf (21) umfasst einen ersten Abschnitt, hergestellt durch den Bodenschlitten (11, 13), einen zweiten Abschnitt, hergestellt durch die Deckplatte (18) und verbunden mit der Deckseite (19), und einen dritten Abschnitt zum Verbinden besagten ersten und zweiten Abschnitts miteinander; und zumindest einen Bearbeitungskopf (30) zum Bearbeiten der Komponenten (2),
**dadurch gekennzeichnet, dass**
der dritte Abschnitt des ersten pneumatischen Kreislaufs (21) eine flexible erste Zuführleitung umfasst (23), welche mit dem Bodenschlitten (11, 13) und der Deckplatte (18) gekoppelt ist, und innerhalb einer zum Führen der ersten Zuführleitung (23) während der Verschiebungen der Deckplatte (18) zwischen besagter abgesenkter und angehobener Stellung ausgelegten Kabelhalterkette (26) behaust ist.

2. Maschine nach Anspruch 1, wobei die Deckplatte (18) durch eine mit einer Vielzahl an Zuführlöchern (24) ausgestatteten Unterseite (20) begrenzt ist;
ein zweiter pneumatischer Kreislauf (22) verbindend die Zuführlöcher (24) mit einer pneumatischen Drucklufteinrichtung.

3. Maschine nach Anspruch 2, wobei der zweite pneumatische Kreislauf (22) einen ersten Abschnitt, hergestellt durch den Bodenschlitten (11, 13), einen zweiten Abschnitt, hergestellt durch die Deckplatte (18) und verbunden mit den Zuführlöchern (24), und einen dritten Abschnitt zum Verbinden besagter ersten und zweiten Abschnitte miteinander umfasst.

4. Maschine nach Anspruch 3, wobei der dritte Abschnitt des zweiten pneumatischen Kreislaufs (22) eine flexible zweite Zuführleitung (25) umfasst, welche mit dem Bodenschlitten (11, 13) und der Deckplatte (18) im Eingriff steht, und innerhalb der Kabelhalterkette (26) behaust ist, um während Bewegungen der Deckplatte (18) zwischen besagter abgesenkter und angehobener Stellung geführt zu werden.

5. Maschine nach Anspruch 3 oder 4, wobei jeder Stützblock (10) ferner zumindest einen Betätigungszylinder (18) zum Bewegen der Deckplatte (18) zwischen besagter abgesenkter und angehobener Stellung umfasst, der erste Abschnitt des zweiten pneumatischen Kreislaufs (22) ist angeschlossen an den Betätigungszylinder (17).

6. Maschine nach einem der vorhergehenden Ansprüche, wobei die Deckplatte (18) einen Teil einer austauschbaren Stützeinheit (12) definiert, lösbar befestigt am Bodenschlitten (11).

7. Maschine nach Anspruch 6, wobei die Stützeinheit (12) ferner eine lösbar am Bodenschlitten (11) befestigte Bodenplatte (13) umfasst, die Deckplatte (18) ist gleitend mit besagter Bodenplatte (13) gekoppelt.

8. Maschine nach einem der vorhergehenden Ansprüche, ferner umfassend ein Portal (27), welches sich oberhalb der Querträger (8) quer bezüglich der Seitenträger (7) erstreckt, und den Bearbeitungskopf (30) trägt.

9. Maschine nach Anspruch 8, ferner umfassend eine am Portal (27) angebrachte Kantenanleimeinheit (32).

10. Maschine nach Anspruch 8 oder 9, ferner umfassend ein mit Seitenträgern (7) ausgestattetes Bett (5); das Portal (27) ist entlang des Betts (5) quer zu den Querträgern (8) beweglich.

## Revendications

1. Machine pour traiter des composants (2) en bois ou similaire, la machine comprenant au moins deux éléments latéraux de guidage longitudinaux (7) ; au moins deux traverses (8) agencées sur les éléments latéraux (7) et pouvant être positionnées le long des éléments latéraux (7) ; au moins un bloc de support (10) monté sur chaque traverse (8) pour maintenir au moins un composant (2), chaque bloc de support (10) comprenant une glissière inférieure (11, 13) couplée de manière coulissante à la traverse (8) correspondante et une plaque supérieure (18) qui est limitée par une face supérieure plate (19) définissant un plan de support (P) pour au moins un composant (2), et est montée sur la glissière inférieure (11, 13) pour se déplacer entre une position abaissée et une position levée ; un premier circuit pneumatique (21) pour raccorder la face supérieure (19) à un dispositif d'aspiration pneumatique, le premier circuit pneumatique (21) comprenant une première section réalisée à travers la glissière inférieure (11, 13), une deuxième section réalisée à travers la plaque supérieure (18) et raccordée avec la face supérieure (19), et une troisième section pour raccorder lesdites première et deuxième sections entre elles ; et au moins une tête de commande (30) pour usiner les composants (2) ; et étant **caractérisée en ce que** la troisième section du premier circuit pneumatique (21) comprend une première ligne d'alimentation (23) souple qui est couplée à la glissière inférieure (11, 13) et à la plaque supérieure (18), et est logée dans une chaîne porte-câble (26) conçue pour guider la première ligne d'alimentation (23) pendant les déplacements de la plaque supérieure (18) entre lesdites positions abaissée et levée.

2. Machine selon la revendication 1, dans laquelle la plaque supérieure (18) est limitée par une face inférieure (20) prévue avec une pluralité de trous d'alimentation (24) ; un second circuit pneumatique (22) raccordant les trous d'alimentation (24) avec un dispositif pneumatique à air comprimé.

3. Machine selon la revendication 2, dans laquelle le second circuit pneumatique (22) comprend une première section réalisée à travers la glissière inférieure (11, 13), une deuxième section réalisée à travers la plaque supérieure (18) et raccordée avec les trous d'alimentation (24) et une troisième section pour raccorder lesdites première et deuxième sections entre elles.

4. Machine selon la revendication 3, dans laquelle la troisième section du second circuit pneumatique (22) comprend une seconde ligne d'alimentation (25) souple qui est mise en prise avec la glissière inférieure (11, 13) et la plaque supérieure (18), et est logée dans la chaîne porte-câble (26) pour être guidée pendant les déplacements de la plaque supérieure (18) entre lesdites positions abaissée et levée.

5. Machine selon la revendication 3 ou 4, dans laquelle chaque bloc de support (10) comprend en outre au moins un vérin de commande (17) pour déplacer la plaque supérieure (18) entre lesdites positions abaissée et levée, la première section du second circuit pneumatique (22) étant raccordée au vérin de commande (17) .

6. Machine selon l'une quelconque des revendications précédentes, dans laquelle la plaque supérieure (18) définit une partie d'une unité de support interchangeable (12) montée, de manière détachable, sur la glissière inférieure (11).

7. Machine selon la revendication 6, dans laquelle l'unité de support (12) comprend en outre une plaque inférieure (13) montée, de manière détachable, sur la glissière inférieure (11) ; la plaque supérieure (18) étant couplée, de manière coulissante, à ladite plaque inférieure (13) .

8. Machine selon l'une quelconque des revendications précédentes et comprenant en outre un portail (27) qui s'étend au-dessus des traverses (8) transversalement aux éléments latéraux (7) et supporte la tête de commande (30).

9. Machine selon la revendication 8 et comprenant en outre une unité de placage de chant (32) montée sur le portail (27).

10. Machine selon la revendication 8 ou 9 et comprenant en outre une base (5) prévue avec des éléments latéraux (7) ; le portail (27) étant mobile le long de la base (5) transversalement aux traverses (8).
